# EUROPEAN PATENT SPECIFICATION

(11) **EP 0 645 298 B1**
(45) Date of publication and mention of the grant of the patent: **10.06.1998**
(21) Application number: 94118161.2
(22) Date of filing: 13.12.1991
(51) Int. Cl.: B62D 7/18

(54) **Wheel axle**
Radachse
Essieu de roue

(30) Priority: 17.12.1990 SE 9004021
(43) Date of publication of application: 29.03.1995
(62) Divisional of application: 92901404.1
(73) Proprietor: AB VOLVO, 405 08 Göteborg (SE)
(72) Inventor: Bodin, Jan-Olof, S-441 65 Alingsas (SE); Dagh, Ingemar, S-422 47 Hisingsbacka (SE)
(74) Representative: Hellbom, Lars Olof

(56) References cited:
- DE-B- 2 624 704
- US-A- 1 783 614
- US-A- 2 242 048
- US-A- 2 652 264
- US-A- 3 441 288
- US-A- 3 801 124

## Description

The present invention relates to a wheel axle for a non-driven, steerable vehicle wheel for heavy motor vehicles, comprising a rigid axle beam, a king pin fixed in a bore in said axle beam, a spindle unit with a pair of axially spaced coaxial bores which receive bearing means mounted on opposite end portions of said king pin, and with means to support parts of a brake mechanism, and an axle stub unit which is fixed to the spindle unit and on which a wheel hub is intended to be mounted.

Conventional wheel axles for heavy vehicles are made of forged units with the spindle unit and the axle stub unit made together in one piece, e.g. as shown in US-A-3 441 288. However, forged units, in contrast to cast units, cannot be made in complicated shapes. In the case of wheel axle spindle units, these have such complicated shapes that after forging, they must be subjected to extensive milling, reaming and/or lathing to achieve their final shapes. The material in the forged units is high quality steel, and the waste in materials will be expensive when chips are cut away.

In wheel axle devices of this type known up to now, the braking mechanism is secured to the spindle unit with the aid of a separate intermediate flange or adapter which is fixed to the spindle by means of screws.

US-A-3 801 124 discloses a wheel axle arrangement having an axle stub and a lower knuckle portion of a spindle unit made in one piece as a forged unit while the rest of the spindle unit including the upper knuckle is a cast unit. The upper and lower knuckles have bores for upper and lower ball joints. This wheel axle arrangement does not have a rigid axle beam and king pins and it cannot be used in heavy motor vehicles.

The purpose of the present invention is in general to provide a wheel axle of the type described by way of introduction which, while fulfilling highly set strength requirements, can be manufactured at lower costs than wheel axles known up to now. A particular purpose is to achieve a wheel axle which solves special problems arising in connection with the use of disc brakes in heavy trucks.

This is achieved according to the invention by virtue of the fact that the spindle unit with associated support means for the brake mehcanism is a cast unit, that the axle stub unit is a separate, forged unit and that the spindle unit and the axle stub unit are joined together.

The invention is based on the insight that the mechanical stresses on the axle stub unit are such that for reasons of strength it should be forged, but that the stresses on the spindle unit and the support means for the brake mechanism (the intermediate flange) permit casting of these components. The axle stub unit has an uncomplicated shape and can be forged relatively simply while the spindle unit and the brake support formed in one piece with each other can be given a very complicated shape when cast. The final result will be a wheel axle which can be manufactured of inexpensiv material and with less material waste. At the same time, a design can be simply obtained which is more rigid than the known forged spindle unit, which has a separate intermediate flange for the brake mechanism.

The increased rigidity which can be achieved in the cast spindle unit has particular advantages in connection with disc brakes and in a preferred embodiment of the wheel axle according to the invention, said supporting means for the brake mechanism comprise a pair of mounting flanges provided with bores, to which flanges a disc brake caliper is intended to be screwed fast by means of screws in the bores.

In a disc brake the braking force is usually applied asymmetrically by the brake pads, in contrast to the brake shoes in a drum brake, which usually apply the braking force approximately symmetrically against the drum. The forces occurring due to the oblique loading of a brake disc in a heavy vehicle can be so great (at braking torque up to 20,000 Nm) that it is difficult, when using a forged spindle, to prevent a certain amount of deformation of the spindle or the support means for the brake mechanism, and the caliper and the brake disc will become misaligned resulting in oblique wear of the disc and the brake pad. When casting the spindle unit and brake torque, it is simple to achieve `a single unit which is sufficiently rigid to absorb said forces without the risk of misalignment.

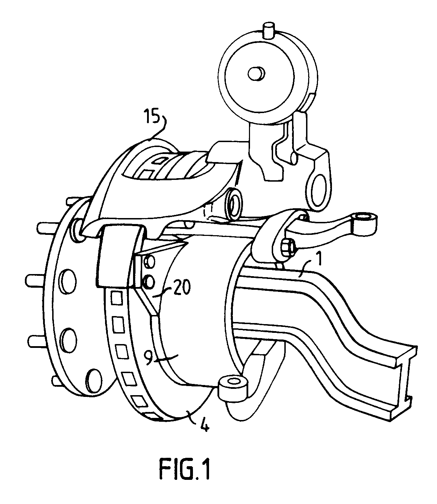

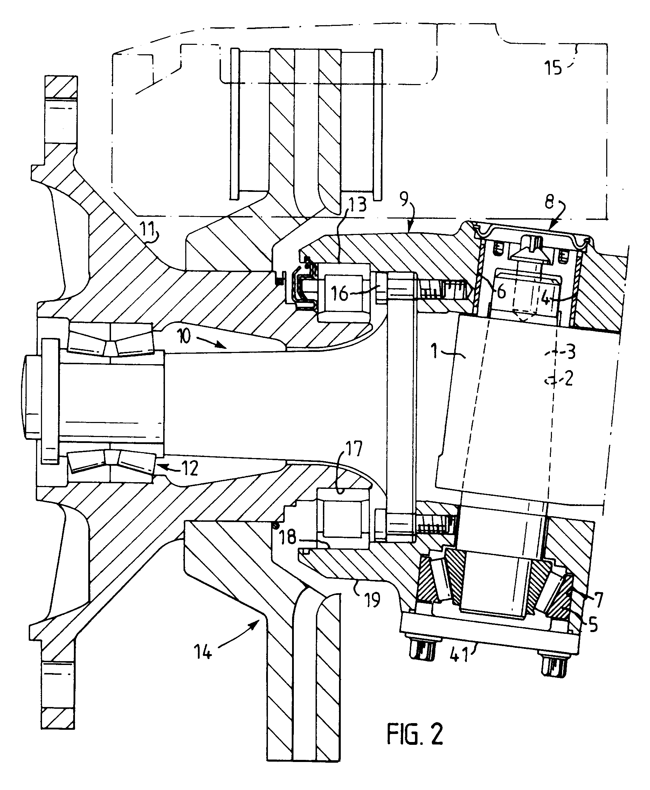

The invention will be described in more detail below with reference to examples shown in the accompanying drawings, of which Fig. 1 shows a schematic perspective view of an embodiment of a wheel axle according to the invention and Fig. 2 shows a longitudinal section through a wheel axle corresponding to Fig. 1.

In Figs. 1 and 2, the numeral 1 designates an outer end of a rigid front axle of a truck. The end of the axle has a conical bore 2 in which a king pin 3 is fixed. At its upper and lower ends the king pin 3 is mounted in bearings 4 and 5, which are mounted in upper and lower bores 6 and 7, respectively, in a wheel axle generally designated 8, which in the embodiment shown comprises a spindle unit 9 and an axle stub unit 10, on which a wheel hub 11 is mounted in distal and proximal bearings 12 and 13, respectively. The hub supports a brake disc 14 and the spindle unit 9 supports a brake caliper 15 which grips the disc. The brake caliper 15 is screwed securely to flanges 20 on the spindle unit 9.

As can be seen in Fig. 2 the spindle unit 9 and the axle stub unit 10 are formed as two separate parts which are held firmly by screws 16. The spindle unit 9 is cast, while the axle stub is forged, to achieve the required strength properties in both the units by optimum production methods.

The hub 11 is mounted on the axle stub unit 10 in a distal bearing 12 comprising a pair of conical roller bearings and a proximal bearing 13 consisting of a roller bearing. This bearing 13 is arranged between an exterior bearing surface 17 on the hub 11 and an interior bearing surface 18 which is milled into a flange 19, which is cast in one piece with the spindle unit 9.

## Claims

1. Wheel axle arrangement for a non-driven, steerable vehicle wheel for heavy motor vehicles, comprising a rigid axle beam (1), a king pin (3) fixed in a bore (2) in said axle beam, a spindle unit (9) with a pair of axially spaced coaxial bores which receive bearing means (4,5) mounted on opposite end portions of said king pin, and with means (20) to support parts (15) of a brake mechanism, and an axle stub unit (10) which is fixed to the spindle unit and on which a wheel hub (11) is intended to be mounted, **characterized in** that the spindle unit (9) with associated support means (20) for the brake mechanism (15) is a cast unit, that the axle stub unit (10) is a separate, forged unit and that the spindle unit and the axle stub unit are joined to each other.

2. Wheel axle according to claim 1, **characterized in** that said support means for the brake mechanism comprise a pair of mounting flanges (20) provided with bores, to which flanges a brake caliper (15) for a disc brake is intended to be screwed by means of screws received in the bores.

3. Wheel axle according to claim 1 or 2, **characterized in** that the axle stub unit (10) has a flange with bores, through which screws (16) extend into threaded bores in the spindle unit.

## Patentansprüche

1. Radachsen-Anordnung für ein nichtangetriebenes, lenkbares Fahrzeugrad eines Schwerlastfahrzeugs, umfassend einen starren Achskörper (1), einen Achsschenkelbolzen (3), der in einer Bohrung (2) in dem Achskörper befestigt ist, eine Achseneinheit (9) mit einem Paar axial beabstandeter kcaxialer Bohrungen, die auf einander gegenüberliegenden Endstücken des Achsschenkelbolzens angebrachte Lagermittel (4, 5) aufnehmen, und mit Mitteln (20), um Teile (15) einer Bremseinrichtung zu tragen, und eine Achsstummeleinheit (10), die an der Achseneinheit angebracht ist und auf der eine Radnabe (11) bestimmt ist befestigt zu werden, **dadurch gekennzeichnet, daß** die Achseneinheit (9) mit zugehörigen Tragmitteln (20) für die Bremseinrichtung (15) eine Gußeinheit ist, daß die Achsstummeleinheit (10) eine separate, geschmiedete Einheit ist und daß die Achseneinheit und die Achsstummeleinheit miteinander verbunden sind.

2. Radachse nach Anspruch 1, **dadurch gekennzeichnet, daß** die Tragmittel für die Bremseinrichtung ein Paar mit Bohrungen versehene Befestigungsflansche (20) umfassen, an die ein Bremssattel (15) für eine Scheibenbremse mit Hilfe von in den Bohrungen aufgenommenen Schrauben angeschraubt werden soll.

3. Radachse nach Anspruch 1 oder 2, **dadurch gekennzeichnet, daß** die Achsstumneleinheit (10) einen Flansch mit Bohrungen hat, durch die sich Schrauben (16) bis in Gewindebohrungen in der Achseneinheit erstrecken.

## Revendications

1. Agencement d'essieu de roue pour une roue non motrice directrice de véhicule pour des véhicules à moteur à grand rendement, comprenant une poutre (1) d'essieu rigide, un pivot de fusée (3) fixé dans un alésage (2) ménagé dans la poutre d'essieu, une unité (9) de tourillon munie d'une paire d'alésages coaxiaux espacés axialement recevant des moyens (4,5) formant paliers montés sur des parties d'extrémité opposées du pivot de fusée, et munie de moyens (20) pour porter des parties (15) d'un mécanisme de frein, et une unité (10) de fusée d'essieu qui est fixée à l'unité de tourillon et sur laquelle un moyeu (11) de roue est destiné à être monté, caractérisé en ce que l'unité (9) de tourillon avec les moyens (20) de support pour le mécanisme de frein (15) est une unité moulée, en ce que l'unité (10) de fusée d'essieu est une unité forgée séparée et en ce que l'unité (9) de tourillon et l'unité de fusée d'essieu sont reliées l'une à l'autre.

2. Essieu de roue selon la revendication 1, caractérisé en ce que les moyens de support pour le mécanisme de frein comprennent une paire de flasques (20) de montage munis d'alésages, un étrier (15) de [rein pour frein à disque étant destiné à être vissé à ces flasques au moyen de vis reçues dans les alésages.

3. Essieu de roue selon la revendication 1 ou 2, caractérisé en ce que l'unité (10) de [usée d'essieu comporte un flasque avec des alésages, à travers lesquels des vis (16) s'étendent dans des alésages taraudés dans l'unité de tourillon.
